(19) Europäisches Patentamt
European Patent Office
Office européen des brevets

(11) Veröffentlichungsnummer : **0 369 119 B1**

# (12) EUROPÄISCHE PATENTSCHRIFT

(45) Veröffentlichungstag der Patentschrift : **13.05.92 Patentblatt 92/20**

(51) Int. Cl.$^5$ : **G01P 3/46**

(21) Anmeldenummer : **89114952.8**

(22) Anmeldetag : **12.08.89**

(54) **Verfahren zur Erzeugung von digitalen Drehzahl- und Drehwinkelinformationen mittels eines Funktionsdrehmelders.**

(30) Priorität : **10.10.88 DE 3834384**

(43) Veröffentlichungstag der Anmeldung : **23.05.90 Patentblatt 90/21**

(45) Bekanntmachung des Hinweises auf die Patenterteilung : **13.05.92 Patentblatt 92/20**

(84) Benannte Vertragsstaaten : **CH DE FR GB IT LI NL**

(56) Entgegenhaltungen :
**EP-A- 0 127 890**
**GB-A- 2 008 768**
**PATENT ABSTRACTS OF JAPAN, Band 9, Nr. 113 (P-356)[1836], 17. Mai 1985; & JP-A-60 367 (SHINKO DENKI K.K.) 05-01-1985**

(73) Patentinhaber : **Lenze GmbH & Co. KG Aerzen**
**Hans-Lenze-Strasse 1**
**W-3258 Aerzen 2 (DE)**

(72) Erfinder : **Karl, Heinz-Dietmar, Dipl.-Ing.**
**Beethovenstrasse 12**
**W-4924 Barntrup (DE)**
Erfinder : **Tinebor, Manfred, Dipl.-Ing.**
**Enzianweg 1**
**W-4924 Barntrup (DE)**
Erfinder : **Krietemeier, Jürgen, Dipl.-Ing.**
**Gartenweg 3**
**W-3258 Aerzen 1 (DE)**

(74) Vertreter : **Elbertzhagen, Otto et al**
**Patentanwälte Thielking & Elbertzhagen**
**Gadderbaumer Strasse 20**
**W-4800 Bielefeld 1 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue Saint-Denis, 75001 PARIS

## Beschreibung

Die Erfindung bezieht sich auf ein Verfahren zur Erzeugung von digitalen Drehzahl- und Drehwinkelinformationen mittels eines Funktionsdrehmelders nach dem Amplitudenverfahren, bei dem eine Trägerschwingung in Abhängigkeit von einem vorgegebenen Winkel $\varphi$ sinus- und cosinusförmig amplitudenmoduliert wird und ein daraus gebildetes Sinussignal sowie Cosinussignal in die zueinander versetzten Statorwicklungen des Drehmelders eingespeist werden, wobei die Rotorwicklung des Drehmelders ein Drehmeldersignal liefert, aus dem durch amplitudenmäßige Auswertung die Drehwinkelinformation abgeleitet wird.

Funktionsdrehmelder, wie Resolver oder Synchro, sind robuste Signalgeber, mit denen sich sowohl Drehzahl- als auch Drehwinkelinformationen gewinnen lassen. Es gibt grundsätzlich zwei Möglichkeiten, die Signale von Funktionsdrehmeldern auszuwerten. Zum einen wird der Doppler-Effekt durch phasen- und/oder frequenzmäßige Auswertung der Signale genutzt. Der Doppler-Effekt entsteht durch die Addition einer Referenzfrequenz mit der Rotorfrequenz des Drehmelders. Der Frequenzunterschied zwischen der Referenzfrequenz und der Signalfrequenz des Drehmelders ist ein Maß für dessen Drehzahl. Die Phasenverschiebung des Drehmeldersignals zum Referenzsignal ist hierbei ein Abbild des mechanischen Rotorwinkels. Nachteile der phasenmäßigen Auswertung zur Ableitung der Drehwinkelinformation ergeben sich durch die Temperaturabhängigkeit der Drehmelderzeitkonstante, die einen Phasenfehler hervorruft, und durch eine hohe Störempfindlichkeit, die nur kurze Drehmelderzuleitungen zuläßt.

Zum anderen kann die Drehwinkelinformation durch amplitudenmäßige Auswertung der Drehmeldersignale erfolgen, wozu Interferenzen genutzt werden. Hierauf beziehen sich die gattungsbildenden Merkmale der Erfindung, entsprechende amplitudenmäßige Drehmelderauswertungen sind aus der US-PS 3,720,866 und der DE-OS 36 19 285 bekannt. Bei der amplitudenmäßigen Auswertung der Drehmeldersignale werden die vorstehend geschilderten Nachteile vermieden. Bei den bekannten Amplitudenverfahren wird jedoch lediglich die Drehwinkelinformation aus dem Amplitudenverhältnis der sinus- und cosinusförmig modulierten Trägerfrequenzsignale gewonnen.

Nach dem in der US-PS 3,720,866 beschriebenen Verfahren kann mit hinreichend guter Auflösung und Genauigkeit der Drehwinkel eines Synchros mittels eines Digital-Prozessors berechnet werden. Will man jedoch aus der digitalen Winkelinformation eine digitale Drehzahlinformation ableiten, so ist dies nur sehr bedingt möglich. Dies erkennt man anhand des nachstehenden Zahlenbeispiels:

Es steht eine Winkelauflösung von 14 bit (16.384 Winkelschritte pro Umdrehung) zur Verfügung. Die maximal zu berücksichtigende Drehzahl beträgt 3.000 $min^{-1}$, und es ist danach zu fragen, welche kleinste Drehzahlauflösung bei einer Meßtotzeit von 0,1 ms erreichbar ist.

Die Frequenz oder Anzahl der Winkelschritte pro Sekunde beträgt:

$$f = \frac{3000\ 16.384}{60s} = 819.200\ Hz$$

Die Anzahl der Winkelschritte pro Meßtotzeit ist

$z = f \quad T_t = 819{,}2\ KHz \quad 0{,}1\ ms = 81{,}92$

Folglich ändert sich bei maximaler Drehzahl des Drehmelders der Winkel trotz der hohen Winkelauflösung nur um etwa 82 Schritte der Meßtotzeit. Für die kleine Drehzahlauflösung muß mindestes ein Winkelschritt pro Meßtotzeit erfolgen, damit beträgt die kleinste Drehzahlauflösung

$$n_{min} = \frac{n_{max}}{z} = \frac{3.000\ min^{-1}}{81{,}92} = 36{,}6\ min^{-1}$$

Der erfaßbare Drehzahlstellberech von 82 ist für moderne Servoantriebseinsatzfälle völlig unzureichend. Um höhere Stellbereiche zu erzielen, müßte die Meßtotzeit entsprechend verlängert werden. Dies ist wiederum nur mit Einschränkungen in der Dynamik der Antriebsregelung und der Laufruhe bei kleinen Drehzahlen möglich. Für sehr reaktionsschnelle Servoantriebe kommt eine Vergrößerung der Meßtotzeit nicht in Frage. Nach dem in der DE-OS 36 19 285 beschriebenen Verfahren erzielt man ein sehr gutes analoges Drehzahlsignal von einem Resolver. Würde man jedoch aus diesem analogen Drehzahlsignal über einen Analog-Digital-Wandler ein digitales Drehzahlwort erzeugen, so schränkten Offset und Drifterscheinungen den Drehzahlregelbereich des Antriebs und die Genauigkeit erheblich ein.

Der Erfindung liegt deshalb die Aufgabe zugrunde, bei einem Verfahren der gattungsgemäßen Art aus dem Drehmelder ein hochauflösendes,offsetloses Drehzahlwort innerhalb sehr kurzer Meßtotzeit zu erhalten.

Diese Aufgabe wird bei einem Verfahren der gattungsbildenden Art nach der Erfindung dadurch gelöst, daß das empfangene Drehmeldersignal digital gewandelt und demoduliert wird, daß das demodulierte Drehmeldersignal mittels eines Regelalgorithmus zu Null geregelt und als Reglerausgangssignal ein digitales Drehzahlwort gewonnen wird, das durch numerische Integration dieses Drehzahlwortes ein Winkelwort erzeugt wird und daß zugleich die Amplitudenmodulation der Trägerschwingung in der Abhängigkeit vom Sinus bzw. Cosinus des erzeugten Winkelwortes durchgeführt wird.

In vorteilhafter Weiterbildung des erfindungsgemäßen Verfahrens werden die Digitalwandlung und Demodulierung des Drehmeldersignals, die Berechnung des Drehzahlwortes mittels des Regelalgorithmus, die Bildung des Winkelwortes durch numerische Integration, die Erzeugung der Trägerfrequenz und die Modulation der Trägerschwingung mittels eines Mikrokontrollers mit einem Festwertspeicher durchgeführt, an dessen Eingang das Drehmeldersignal anliegt.

Der besondere Vorteil der Erfindung liegt darin, daß aus dem Drehmeldersignal unmittelbar eine digitale Drehzahlinformation gewonnen wird, aus der dann die Winkelinformation abgeleitet wird. Es wird also das digitale Drehzahlwort nicht aus der digitalen Winkelinformation gewonnen, denn selbst der Informationsgehalt einer sehr hohen Winkelauflösung reicht nicht aus, um eine hochauflösende Drehzahlinformation innerhalb kurzer Meßtotzeit zu erhalten. Die Erfindung geht hier den umgekehrten Weg und leitet aus den Drehmeldersignalen ein hochauflösendes, offsetloses Drehzahlwort bei sehr kurzer Meßtotzeit ab.

Die Erfindung wird nachfolgend anhand der Zeichnung an Ausführungsbeispielen noch näher erläutert. Dabei zeigen:

Fig. 1 einen Signalflußplan für die Signalauswertung bei einem Funktionsdrehmelder - nachfolgend "Resolver" genannt -,

Fig. 2 einen Stromlaufplan für die Signalauswertung eines Resolvers unter Verwendung eines Mikrokontrollers und

Fig. 3 den zu dem Mikrokontroller gem. Fig. 2 gehörenden Programmablauf.

Im einzelnen veranschaulicht Fig. 1 eine Regelanordnung mit einem Resolver 1 dessen zueinander elektrisch um 90° versetzte Statorwicklungen und dessen Rotorwicklung sich in einem Regelkreis befinden. Die Statorwicklungen des Resolvers 1 werden von einem Winkelfunktionsglied 5 mit sinusförmigen Signalen (Sinussignalen) und cosinusförmigen Signalen (Cosinussignalen) gespeist, die aus einem Winkelsignal abgeleitet werden. In Modulationsgliedern 6 und 7 werden durch periodisches Umschalten die Sinus- und Cosinussignale mit einer rechteckförmigen Trägerschwingung moduliert, die von einem Oszillator generiert wird. Aufgrund der mechanischen und elektrischen versetzten Anordnung der Resolverwicklungen erhält man aus der Rotorwicklung des Resolvers 1 ein Drehmeldersignal, welches dem Sinus der Winkeldifferenz zwischen dem im Winkelfunktionsglied 5 vorgegebenen Winkel $\varphi$ und dem mechanischen Drehwinkel $\alpha$ des Resolvers 1 entspricht.

Da das Drehmeldersignal zunächst noch mit der Trägerfrequenz behaftet ist, wird es in einem Demodulator 2 durch Vorzeichenumschaltung wieder demoduliert. Das im Demodulator gewonnene Signal $\sin(\varphi - \alpha)$ liegt am Eingang eines Reglers 3 an, dessen Aufgabe es ist, das Signal $\sin(\varphi - \alpha)$ zu 0 zu regeln. Wenn das Signal $\sin(\varphi - \alpha) = 0$ ist, dann entspricht der Winkel $\varphi$ dem mechanischen Drehwinkel $\alpha$.

Der Winkel $\varphi$ wird in einem Integrator 4 gebildet, der am Ausgang $\omega$ des Reglers 3 anliegt, somit entsteht der Winkel $\varphi$ durch Integration des Reglerausgangs $\omega$. Der mechanische Drehwinkel $\alpha$ entspricht dem Integral der mechanischen Drehzahl n des Resolvers 1, folglich stellt der Reglerausgang $\omega$ des Reglers 3 die mechanische Drehzahl n dar. Entsprechend kann der Winkel $\varphi$ am Ausgang des Integrators 4 abgegriffen werden.

Fig. 2 zeigt eine Schaltungsanordnung, mit der die vorbeschriebene Regelung durchgeführt werden kann.

Das von der Rotorwicklung des Resolvers 1 gelieferte Drehmeldersignal wird über einen Verstärker 2 dem Analog-Digital-Wandlereingang ANO eines Mikrokontrollers zugeführt. Der Mikrokontroller 3 berechnet mittels eines Regelalgorithmus ein Drehzahlwort $\omega$, das über einen Zwischenspeicher 15 ausgegeben wird. Durch Integration des die Drehzahlgröße repräsentierenden Drehzahlwortes $\omega$ wird der Winkel $\varphi$ berechnet und über einen Zwischenspeicher 16 ausgegeben. Aus einem Programm- und Datenspeicher 5 entnimmt der Mikrokontroller 3 die Sinus- und Cosinuswerte des Winkels $\varphi$ und gibt diese seriell byteweise an einen Digital-Analog-Wandler 6. Die Sinus- und Cosinuswerte werden für die Dauer einer Trägerfrequenzhalbschwingung analog in Kondensatoren 11 und 12 gespeichert. Die Modulation mit der Trägerfrequenz führt der Mikrokontroller 3 durch Vorzeichenumschaltung mit einem Analogschalter 8 durch. Über Verstärker 13 und 14 werden die modulierten Sinus- und Cosinussignale an die Statorwicklungen des Resolvers 1 gegeben.

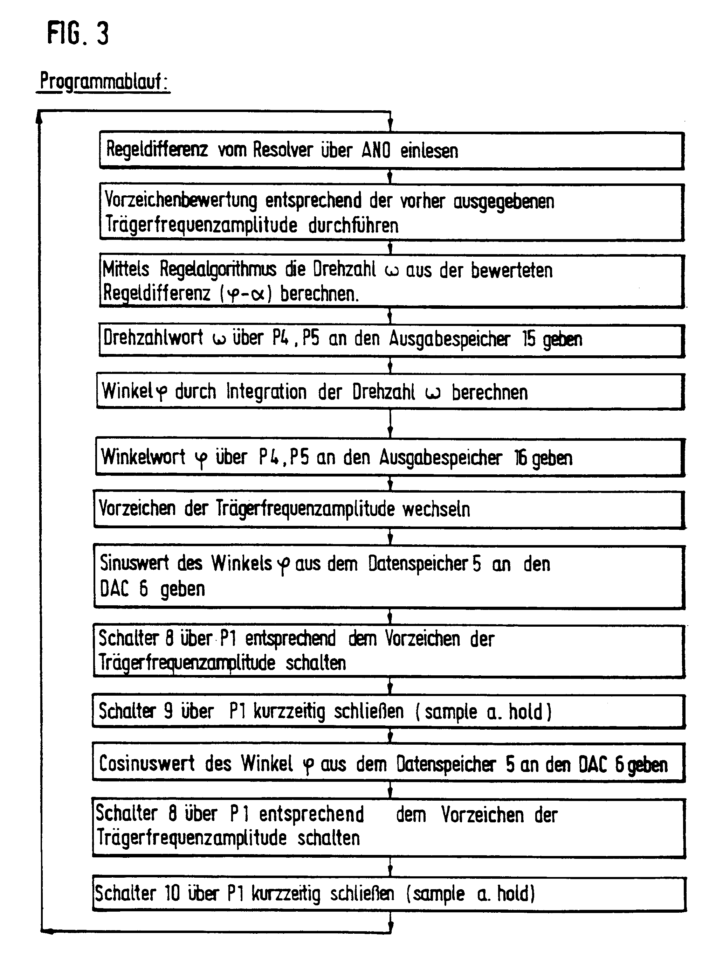

In Fig. 3 ist der Programmablauf des Mikrokontrollers dargestellt. Er wird innerhalb einer Trägerfrequenzhalbschwingung abgearbeitet. Berechnung und Modulation sind vom Mikrokontroller synchronisiert.

Durch die erfindungsgemäße Wahl der Regelstruktur und der direkten Analog-Digital-Wandlung des Drehmeldersignals wird nur ein gering auflösender AD-Wandler benötigt, um ein hochauflösendes Drehzahlwort zu erhalten. Ein Offset des AD-Wandlers macht sich zwar als Fehler in der Winkelgröße $\varphi$ bemerkbar, die Drehzahlgröße $\omega$ ist jedoch offsetlos. Ein Fehler der Drehzahlgröße $\omega$ würde zu einem Winkelfehler aufintegriert, der vom Regler erfaßt und ausgeregelt wird.

Da der AD-Wandler hier nur den Sinus der Winkelabweichung ($\varphi$ - $\alpha$) übertragen muß, braucht der Auflösungsbereich nur den Bruchteil einer gesamten Umdrehung von 360° des Drehmelders betragen und nur die dynamisch maximal auftretende Regelabweichung berücksichtigen. Mit einem optimierten Regelalgorithmus bleibt selbst bei sehr großen Beschleunigungen von 20.000 rad $s^{-2}$ die Regelabweichung ($\varphi$ - $\alpha$) kleiner 1°. Wegen des kleinen erforderlichen Auflösungsbereiches ist der interne 8 bit-AD-Wandler eines handelsüblichen Mikrokontrollers für die Erzeugung eines 16 bit-Drehzahlwortes völlig ausreichend. Da sich nur sehr kleine Winkelabweichungen ergeben, wird in sehr guter Näherung der Sinus der Winkelabweichung gleich der Winkelabweichung ($\varphi - \alpha \approx \sin(\varphi - \alpha)$ ). Es werden daher sehr einfach Winkelabweichungen interpoliert, die kleiner sind, als die Winkelauflösung der Trägerfrequenzmodulation. Diese Information aus der Interpolation würde für die Erzeugung eines 16 bit- Drehzahlwortes $\omega$ verlorengehen, würde man die Drehzahl $\omega$ aus dem Winkel $\varphi$ ableiten.

Zur Erzeugung eines 16 bit-Drehzahlwortes ist für die Modulation der Trägerfrequenz eine 90°-Sinustabelle im Datenspeicher 5 mit 12 bit Breite ausreichend. Dies ergibt eine 14 bit-Winkelauflösung der Modulation für eine 360°-Umdrehung. Für die amplitudenmäßige Modulation der Trägerfrequenz wurde ein 12 bit-Digital-Analog-Wandler gewählt.

Folgende Eckdaten werden mit einer erfindungsgemäßen Schaltungsanordnung unter Verwendung eines handelsüblichen 8 bit- Mikrokontrollers mit 12 MHz Taktfrequenz erreicht:

| | |
|---|---|
| Trägerfrequenz | 6,25 KHz |
| Meßtotzeit | 80 µs |
| max. Drehzahl | > 6000 $min^{-1}$ |
| Winkelauflösung pro | 14 bit (16.384 Winkelschritte Umdrehung) |
| Drehzahlauflösung | 16 bit (65.536 Drehzahl schritte) |
| resultierender Drehzahlstellbereich | > 30.000 |

Diese hohe Drehzahlauflösung, verbunden mit einer sehr kurzen Meßtotzeit wird von keinem bisher bekannten Verfahren erzielt. Vorteilhaft ist außerdem die geringe Bauteilanzahl, die hierfür erforderlich ist.

Da nur gering auflösende AD- und DA-Wandler benötigt werden, ist diese Schaltungsanordnung zudem noch recht preiswert.

Das Verfahren ist sowohl für Resolver als auch für Synchros anwendbar. In der winkelfunktionsmäßigen Amplitudenmodulation ist lediglich die jeweilige geometrische Anordnung der Ständerwicklungen zu berücksichtigen.

Mit höheren Trägerfrequenzen und 16-bit-Kontrollern lassen sich Meßtotzeit und Auflösungen noch weiter steigern.

**Patentansprüche**

1. Verfahren zur Erzeugung von digitalen Drehzahl- und Drehwinkelinformationen mittels eines Funktionsdrehmelders nach dem Amplitudenverfahren, bei dem eine Trägerschwingung in Abhängigkeit von einem vorgegebenen winkel $\varphi$ sinus- und cosinusförmig amplitudenmoduliert wird und ein daraus gebildetes Sinussignal sowie Cosinussignal in die zueinander versetzten Statorwicklungen des Drehmelders eingespeist werden, wobei die Rotorwicklung des Drehmelders ein Drehmeldersignal liefert, aus dem durch amplitudenmäßige Auswertung die Drehwinkelinformation abgeleitet wird,
dadurch gekennzeichnet,
daß das empfangene Drehmeldersignal digital gewandelt und demoduliert wird, daß das demodulierte Drehmeldersignal mittels eines Regelalgorithmus zu Null geregelt und als Reglerausgangssignal ein digitales Drehzahlwort $\omega$ gewonnen wird, daß durch numerische Integration des Drehzahlwortes ein winkelwort $\varphi$ erzeugt wird und daß zugleich die Amplitudenmodulation der Trägerschwingung in Abhängigkeit vom Sinus bzw. Cosinus des erzeugten winkelwortes $\varphi$ durchgeführt wird.

2. Verfahren nach Anspruch 1,

dadurch gekennzeichnet,
daß die Digitalwandlung und Demodulierung des Drehmeldersignals, die Berechnung des Drehzahlwortes mittels des Regelalgorithmus, die Bildung des winkelwortes durch numerische Integration, die Erzeugung der Trägerfrequenz und die Modulation der Trägerschwingung mittels eines Mikrokontrollers mit einem Festwertspeicher durchgeführt werden, an dessen Eingang das Drehmeldersignal anliegt.

## Revendications

1. Procédé de production d'informations numériques de vitesse et d'angle utilisant un synchro-décomposeur selon la méthode des amplitudes modulées, et dans le cadre duquel une onde porteuse est modulée en amplitude sinusoïdalement et cosinusoïdalement, en dépendance d'un angle $\varphi$ prédéterminé, et un signal sinusoïdal, formé sur cette base, ainsi qu'un signal cosinusoïdal sont mis en mémoire dans les enroulements, décalés par rapport les uns aux autres, du stator du synchro-décomposeur, l'enroulement rotorique du synchro-décomposeur lançant un signal d'état, duquel l'information d'angle peut être déduite par évaluation en fonction de l'amplitude,
caractérisé par le fait
que le signal d'état reçu est converti numériquement et démodulé, puis, étant démodulé, est régularisé à zéro, à l'aide d'un algorithme, et un mot de vitesse numérique $\omega$ est obtenu comme signal de sortie de régulateur, qu'un mot d'angle $\varphi$ (combinaison de signaux) est produit par intégration numérique du mot de vitesse et que, simultanément, la modulation d'amplitude de l'onde porteuse est exécutée en dépendance respective du sinus et du cosinus du mot d'angle produit $\varphi$ .

2. Procédé selon revendication 1,
caractérsié par le fait
que la conversion numérique et la démodulation du signal du synchro-transmetteur, le calcul du mot de vitesse à l'aide de l'algorithme de régulation, la formation du mot d'angle par interprétation numérique, la production de la fréquence porteuse et la modulation de l'onde porteuse à l'aide d'un microcontrôleur sont exécutés avec une mémoire des constantes, à l'entrée de laquelle le signal d'état du synchro-transmetteur porte.

## Claims

1. Process for producing digital speed and rotary angle data by means of a function rotary register according to the amplitude process wherein a carrier oscillation is amplitude-modulated in sine or cosine manner in dependence on a predetermined angle and a sine signal formed therefrom as well as a cosine signal are fed into the mutually off-set stator windings of the rotary register wherein the rotor winding of the rotary register supplies a rotary register signal from which the rotary angle information is derived through an evaluation based on amplitude,
characterised in that
the received rotary register signal is converted and demodulated digitally, that the demodulated rotary register signal is regulated to zero by means of a control algorithm and a digital speed word $\omega$ is obtained as the control starting signal, that an angular word is produced through numerical integration of the speed word and that the amplitude modulation of the carrier oscillation is carried out at the same time in dependence on the sine or cosine of the angular word produced.

2. Process according to claim 1,
characterised in that
the digital conversion and demodulation of the rotary register signal, the calculation of the speed word by means of the control algorithm, the formation of the angular word through numerical integration, the production of the carrier frequency and the modulation of the carrier oscillation are carried out by means of a micro-control with a read-only memory whose output is connected to the rotary register signal.

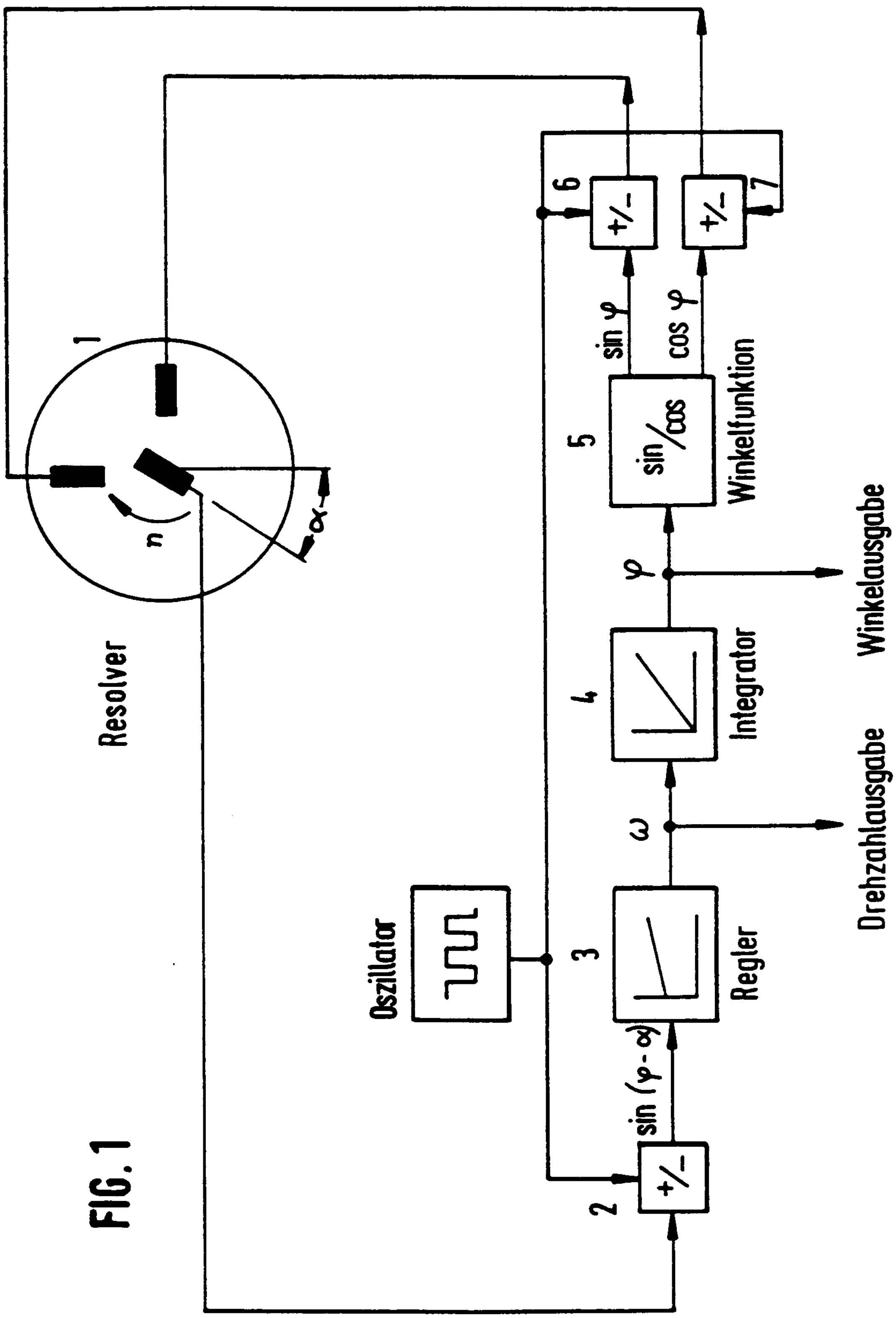
Resolver
1
n
α
Oszillator
2
+/-
sin (φ-α)
3
Regler
ω
4
Integrator
φ
5
sin/cos
Winkelfunktion
sin φ
cos φ
6
+/-
7
+/-
Drehzahlausgabe
Winkelausgabe

FIG. 1

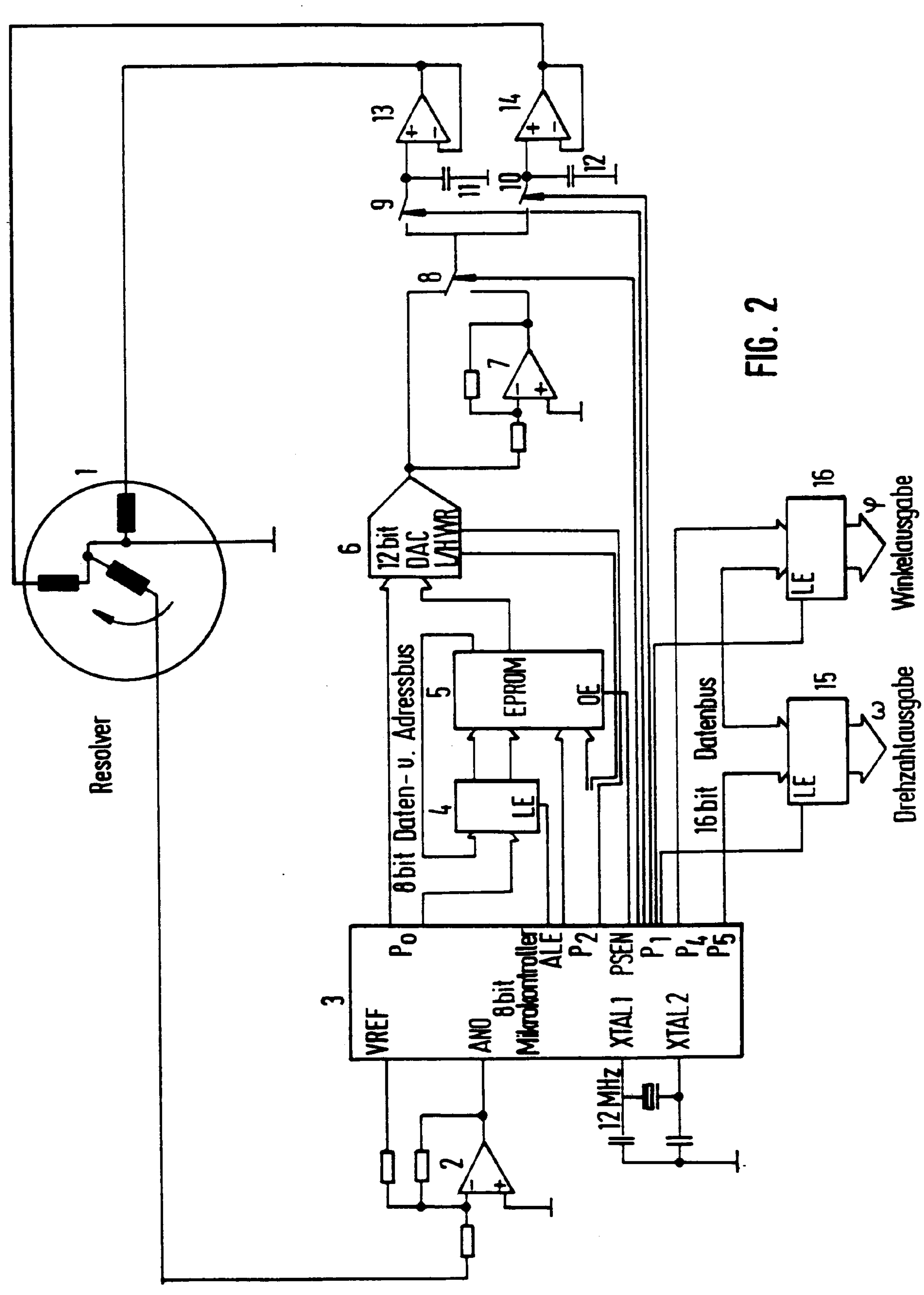
Resolver
1
2
3
VREF
AN0
8bit Mikrokontroller
P0
ALE
P2
PSEN
P1
P4
P5
XTAL1
XTAL2
12 MHz
4
LE
5
EPROM
OE
8 bit Daten- u. Adressbus
6
12 bit DAC
L/H WR
7
8
9
10
11
12
13
14
15
16
LE
LE
Datenbus
16 bit
ω
Drehzahlausgabe
φ
Winkelausgabe

FIG. 2

FIG. 3

Programmablauf: